# EUROPEAN PATENT APPLICATION

(11) **EP 4 822 853 A1**
(43) Date of publication of application: **14.10.2026**
(21) Application number: 26154722.8
(22) Date of filing: 28.01.2026
(51) Int. Cl.: H01M 50/247, H01M 50/267, A01M 31/00

(54) **BATTERY COMPARTMENT FOR ACOUSTIC ENCLOSURE**

(30) Priority: 11.04.2025 US 202519176496
(71) Applicant: Wildlife Acoustics, Inc., Maynard MA 01754-2657 (US)
(72) Inventor: AGRANAT, Ian, Maynard, 01754-2657 (US); MARCINIEC, Richard P., Maynard, 01754-2657 (US); SNYDER, Sherwood Kenneth, Maynard, 01754-2657 (US)
(74) Representative: Brown, Alexander Edward

(57) **Abstract**

An apparatus for autonomous data recording includes acoustic equipment for recording autonomous data and an enclosure to support the acoustic equipment. The enclosure includes a front cover member and a back cover member hingedly and releasably secured to the front cover. The back cover member includes a battery compartment configured to receive one type of at least two types of batteries to power the apparatus. The battery compartment is configured to receive a first type of battery, such as a D cell battery, in a first configuration within the battery compartment and to receive a second type of battery, such as a lithium-ion battery, in a second configuration within the battery compartment.

## Description

### BACKGROUND

### Field of Invention

The present invention is directed to battery-operated, autonomous data recording devices, and more particularly to an enclosure that is particularly suited to supporting acoustic equipment and configured to receive multiple battery types.

### Discussion of Related Art

There are many applications for automated data collection. In particular, the collection of audio data in the field can be used to monitor populations of wildlife, such as birds, bats, frogs and whales for presence, absence, and abundance data for specific species.

One challenge is the ability to power acoustic equipment contained within the enclosure. Presently available enclosures that contain acoustic equipment are configured to receive only one battery type, thereby limiting the flexibility of the acoustic enclosure. The ability to power the acoustic equipment with more than one battery type is particularly desirable.

### SUMMARY

One aspect of the present disclosure is directed to an apparatus for autonomous data recording. In one embodiment, the apparatus comprises acoustic equipment for recording autonomous data and an enclosure to support the acoustic equipment. The enclosure includes a front cover member and a back cover member hingedly and releasably secured to the front cover. The back cover member includes a battery compartment configured to receive one type of at least two types of batteries to power the apparatus. The battery compartment is configured to receive a first type of battery in a first configuration within the battery compartment and to receive a second type of battery in a second configuration within the battery compartment.

Embodiments of the apparatus further may include providing the battery compartment within an interior of the back cover and includes an interior surface. The battery compartment may be defined by a top end wall, a first side wall, a second side wall, and a bottom end wall, each of which are positioned inboard with respect to a back peripheral of the back cover. The first type of batteries may be D cell batteries and the second type of batteries may be lithium-ion batteries. The interior surface of the battery compartment may include a first type of icon, which is provided to inform the operator of the orientation of the first type of batteries, and a second type of icon, which is provided to inform the operator of the orientation of the second type of batteries. The battery compartment, when receiving the first type of batteries, may include a common contact element provided on the top end wall of the back cover within the battery compartment and a negative contact element and a positive contact element provided on the bottom end wall of the back cover within the battery compartment, opposite the common contact element provided on the top end wall. The first type of batteries may extend lengthwise within the battery compartment, with a first battery and a second battery of the first type of batteries provided on one side of the battery compartment and a third battery and a fourth battery of the first type of batteries provided on a second side of the battery compartment. A positive terminal of the first battery of the first type of batteries may engage the common contact element and a negative terminal of the second battery of the first type of batteries may engage the negative element, and a negative terminal of the third battery of the first type of batteries may engage the common contact element and a positive terminal of the fourth battery of the first type of batteries may engage the positive contact element. The battery compartment, when receiving the second first type of batteries, may include a negative contact element provided on the first side wall of the back cover within the battery compartment and a positive contact element provided on the second side wall of the back cover within the battery compartment, opposite the negative contact element provided on the first side wall. A first layer of batteries of the second type of batteries may extend crosswise within the battery compartment. Negative terminals of the first layer of batteries of the second type of batteries may engage the negative contact element and positive terminals of the first layer of batteries of the second type of batteries may engage the positive contact element. A second layer of batteries of the second type of batteries may extend crosswise within the battery department on top of the first layer of batteries of the second type of batteries. Negative terminals of the second layer of batteries of the second type of batteries may engage the negative contact element and positive terminals of the second layer of batteries of the second type of batteries may engage the positive contact element. The front cover may be configured to include one of a battery tool and a raised feature, each of which extends interiorly within the battery compartment to engage at least one of the first type of batteries and the second type of batteries. The front cover further may be configured to include at least one spring feature that extends interiorly within the battery compartment to engage the first type of batteries. The at least one spring feature and the raised feature may be molded as an inner protective cover of the front cover. The tool may be stored within a storage compartment formed in a back wall of the back cover. The front cover member may have a front wall and a front peripheral wall extending from the front wall. The back cover member may have a back wall and a back peripheral wall extending from the back wall. The enclosure further may include at least one hinge configured to connect the front cover member to the back cover member. The at least one hinge may enable the movement of the front cover member and the back cover member between an open position in which the front cover member is spaced from the back cover member and a closed position in which the front cover member engages the back cover member. The enclosure further may include at least one latch configured to releasably secure the front cover member to the back cover member to secure the front cover member and the back cover member in the closed position. The at least one latch may include a snap-fit feature associated with the back cover on the back peripheral edge of the back cover that releasably engages a mating snap-fit feature associated with the front cover on the front peripheral edge of the front cover. The at least one hinge may be configured to connect a front edge of the front peripheral wall of the front cover member to a back edge of the back peripheral wall of the back cover member.

Another aspect of the present disclosure is directed to an apparatus including electronic components powered by batteries. In one embodiment, the apparatus comprises an enclosure to support the electronic components. The enclosure includes a front cover member and a back cover member hingedly and releasably secured to the front cover. The back cover member includes a battery compartment configured to receive one type of at least two types of batteries to power the apparatus. The battery compartment is configured to receive a first type of battery in a first configuration within the battery compartment and to receive a second type of battery in a second configuration within the battery compartment.

Embodiments of the apparatus further may include providing the battery compartment within an interior of the back cover and includes an interior surface. The battery compartment may be defined by a top end wall, a first side wall, a second side wall, and a bottom end wall, each of which are positioned inboard with respect to a back peripheral of the back cover. The first type of batteries may be D cell batteries and the second type of batteries may be lithium-ion batteries. The interior surface of the battery compartment may include a first type of icon, which is provided to inform the operator of the orientation of the first type of batteries, and a second type of icon, which is provided to inform the operator of the orientation of the second type of batteries. The battery compartment, when receiving the first type of batteries, may include a common contact element provided on the top end wall of the back cover within the battery compartment and a negative contact element and a positive contact element provided on the bottom end wall of the back cover within the battery compartment, opposite the common contact element provided on the top end wall. The first type of batteries may extend lengthwise within the battery compartment, with a first battery and a second battery of the first type of batteries provided on one side of the battery compartment and a third battery and a fourth battery of the first type of batteries provided on a second side of the battery compartment. A positive terminal of the first battery of the first type of batteries may engage the common contact element and a negative terminal of the second battery of the first type of batteries may engage the negative element, and a negative terminal of the third battery of the first type of batteries may engage the common contact element and a positive terminal of the fourth battery of the first type of batteries may engage the positive contact element. The battery compartment, when receiving the second first type of batteries, may include a negative contact element provided on the first side wall of the back cover within the battery compartment and a positive contact element provided on the second side wall of the back cover within the battery compartment, opposite the negative contact element provided on the first side wall. A first layer of batteries of the second type of batteries may extend crosswise within the battery compartment. Negative terminals of the first layer of batteries of the second type of batteries may engage the negative contact element and positive terminals of the first layer of batteries of the second type of batteries may engage the positive contact element. A second layer of batteries of the second type of batteries may extend crosswise within the battery department on top of the first layer of batteries of the second type of batteries. Negative terminals of the second layer of batteries of the second type of batteries may engage the negative contact element and positive terminals of the second layer of batteries of the second type of batteries may engage the positive contact element. The front cover may be configured to include one of a battery tool and a raised feature, each of which extends interiorly within the battery compartment to engage at least one of the first type of batteries and the second type of batteries.

### BRIEF DESCRIPTION OF THE DRAWINGS

Aspects and embodiments of the invention are described in detail below with reference to the accompanying drawings. It is to be appreciated that the drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a perspective view of an enclosure for supporting acoustic equipment of an embodiment of the present disclosure;
FIG. 2 is a front view thereof;
FIG. 3 is a back view thereof;
FIG. 4 is a top view thereof;
FIG. 5 is a bottom view thereof;
FIG. 6 is a left side view thereof;
FIG. 7 is a right side view thereof;
FIG. 8 is a front view of the enclosure showing front and back covers of the enclosure in an open position to reveal a battery compartment associated with the back cover;
FIG. 9 is a front view of the enclosure showing the back cover configured with a first type of battery installed within the battery compartment;
FIG. 10 is a front view of the enclosure showing the back cover configured with a single layer of a second type of battery installed within the battery compartment;
FIG. 11 is a front view of the enclosure showing the back cover configured with two layers of the second type of battery installed within the battery compartment;
FIG. 12 is a cross-sectional view of the enclosure shown in FIG. 10 in a closed condition supporting the single layer of the second type of battery;
FIG. 13 is a cross-sectional view of the enclosure shown in FIG. 11 in a closed condition supporting the layers of the second type of battery.

### DETAILED DESCRIPTION

Aspects and embodiments of the present disclosure are directed to a data collection device, and an enclosure that is designed to support acoustic equipment, including but not limited to equipment that is used to record audio, infrasonic and ultrasonic signals. The enclosure is specially designed to protect the acoustic equipment and to enable access to a power supply, e.g., one or more batteries, in which one of two battery types may be used to power the acoustic equipment.

Embodiments of the present disclosure further are directed to an enclosure that is designed to maintain the integrity of the components housed within an interior of the enclosure. The enclosure utilizes a functional hinge and latch mechanism that enables the acoustic equipment, including microphones, amplifiers, power supplies, controllers, and associated components, to operate in a safe and secure environment. Specifically, the enclosure includes a front cover and a back cover, which are connected to one another by a hinge. The back cover is configured to support, among other things, the power supply (e.g., batteries) used to power the acoustic equipment housed by the enclosure. As will be described in greater detail below, the back cover is configured with a unique battery compartment that enables two types of batteries to be installed. The front cover is configured to support a controller including a display, which is provided to display desired information to the operator of the enclosure. The front cover is configured to enclose and protect the acoustic components supported by the enclosure. The front cover is secured to the back cover by a latch to enclose and seal the interior of the enclosure.

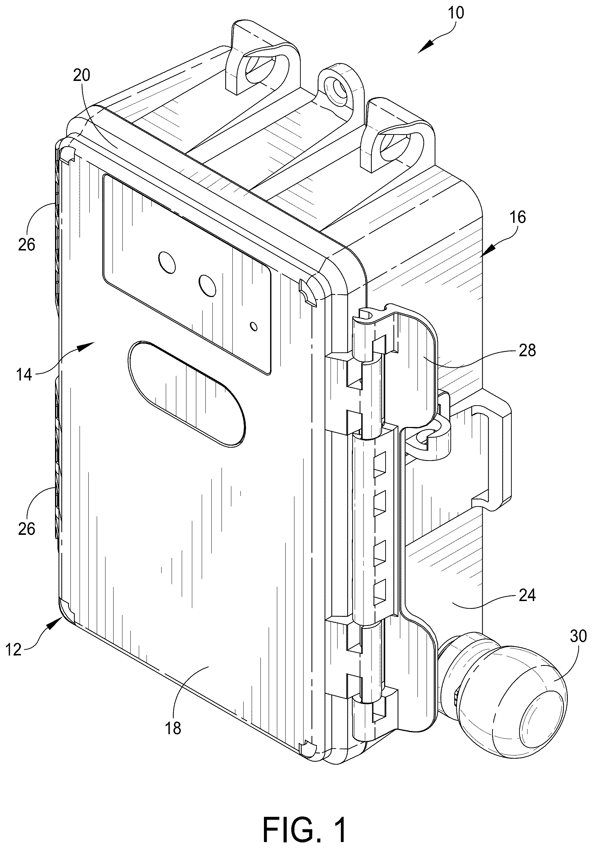

Referring to the drawing figures, and more particularly to FIG. 1, an apparatus for autonomous data recording is generally indicated at 10. The apparatus 10 has a case comprising a generally box-shaped housing or enclosure, generally indicated at 12, with access to an interior of the enclosure 12 through a functional hinge. In a preferred embodiment, the enclosure 12 has a height (H) of approximately 7.12 inches, a width (W) of approximately 5.29 inches, and a depth (D) of approximately 2.50 inches. It should be understood that the size and shape of the enclosure 12 can be determined based on design constraints and requirements when deploying the apparatus 10 in the field. In one embodiment, the enclosure 12 is fabricated from molded plastic material, such as a suitable polycarbonate material, which is strong and resistant to damage caused by ultraviolet light. It should be noted that any appropriate material may be selected to fabricate the enclosure 12, such as plastic, aluminum or carbon fiber.

The enclosure 12 includes a front cover, generally indicated at 14, and a back cover, generally indicated at 16. As shown, the front cover 14 includes a front wall 18 and a front peripheral wall 20, which extends generally perpendicularly from the front wall 18. Similarly, the back cover 16 includes a back wall 22 and a back peripheral wall 24, which extends generally from the back wall 22. The back peripheral wall 24 of the back cover 16 is wider than the front peripheral wall 20 of the front cover 14. When assembled, the front peripheral wall 20 and the back peripheral wall 24 of the front cover 14 and the back cover 16, respectively, are sized and shaped to generally fit together to create an interior space of the enclosure 12. In a certain embodiment, when closed, the front peripheral wall 20 of the front cover 14 and the back peripheral wall 24 of the back cover 16 may be configured to prevent, or substantially prevent, fluids from entering the enclosure 12.

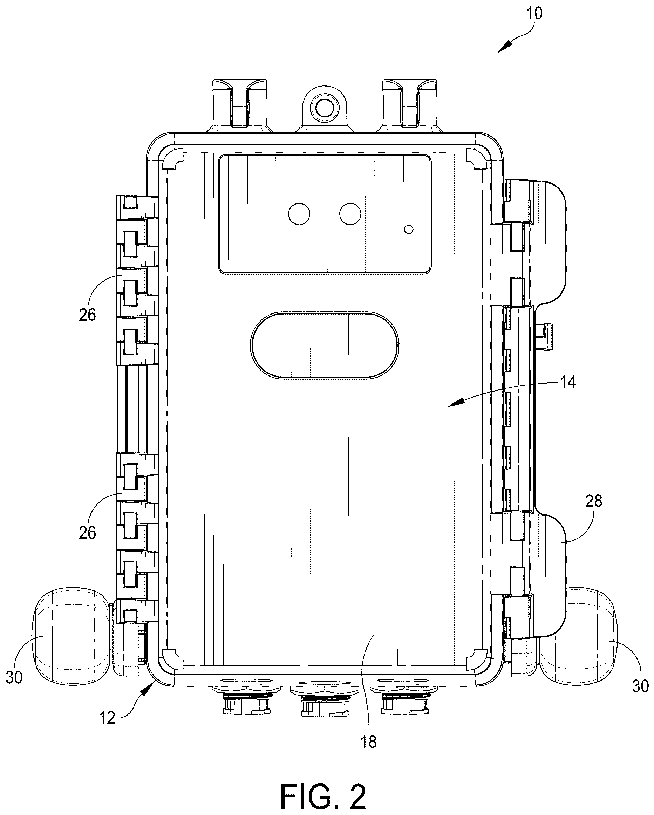

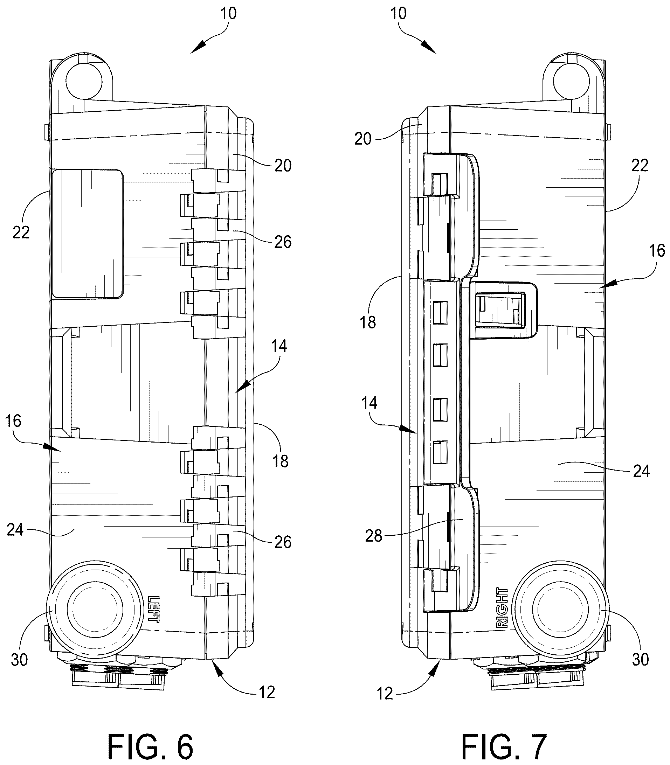

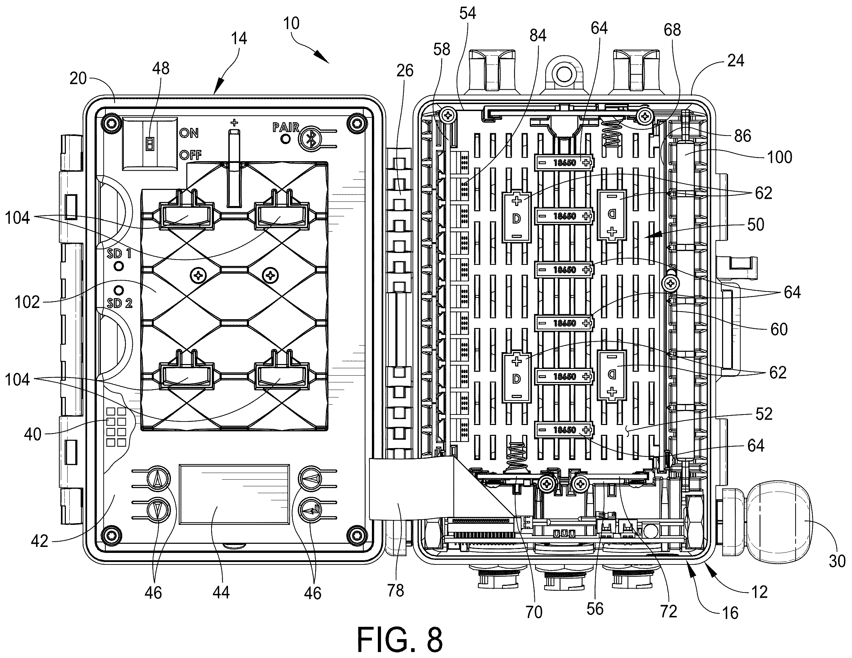

The front peripheral wall 20 of the front cover 14 is connected to the back peripheral wall 24 of the back cover 16 by two elongate hinges, each indicated at 26, provided along respective edges of the front and back peripheral walls 20, 24. It should be noted that although two elongate hinges 26 are provided, the front cover 14 and the back cover 16 may be connected to one another by a single hinge or by multiple hinges extending along the lengths of the respective edges of the covers 14, 16. Also, any number of hinge designs can be employed beyond the particular embodiment shown in the drawing figures. As will be described in greater detail below, the front cover 14 and the back cover 16 are capable of pivoting with respect to one another about an axis defined by the hinges 26, which enables the movement of the front cover 14 and the back cover 16 between an open position in which the front cover 14 is spaced from the back cover 16, and a closed position in which the front cover 14 engages the back cover 16. FIGS. 1-7 illustrate the enclosure 12 of the apparatus 10 in the closed position and FIGS. 8-11 illustrate the enclosure 12 of the apparatus 10 in the open position.

A latch 28 is provided along an opposite edge of the front cover 14 and the back cover 16 to releasably secure the front cover 14 to the back cover 16 in the closed position. The latch 28 includes a snap-fit feature associated with the back cover 16 on the back peripheral edge 24 of the back cover 16 that releasably engages a mating snap-fit feature associated with the front cover 14 on the front peripheral edge 20 of the front cover 14. The manner in which the front cover 14 and the back cover 16 are secured to one another can embody any number of designs.

A seal (not shown) may be provided between mating edges of the front and back peripheral walls 20, 24 of the front cover 14 and the back cover 16, respectively, to seal a connection between the front cover 14 and the back cover 18 when the covers are in the closed position to protect the components of the acoustic equipment that are housed within the interior of the enclosure 12. The seal may be configured and sized to operate with the particular structure of the front and back peripheral walls 20, 24 of the front and back covers 14, 16, respectively. As mentioned above, the enclosure 12 may be fabricated from a suitable polycarbonate material by an injection molded process. In one embodiment, the seal may be created by overmolding a low durometer material over the hard durometer polycarbonate material forming the edges of the front and back peripheral walls 20, 24 of the front cover 14 and the back cover 16, respectively.

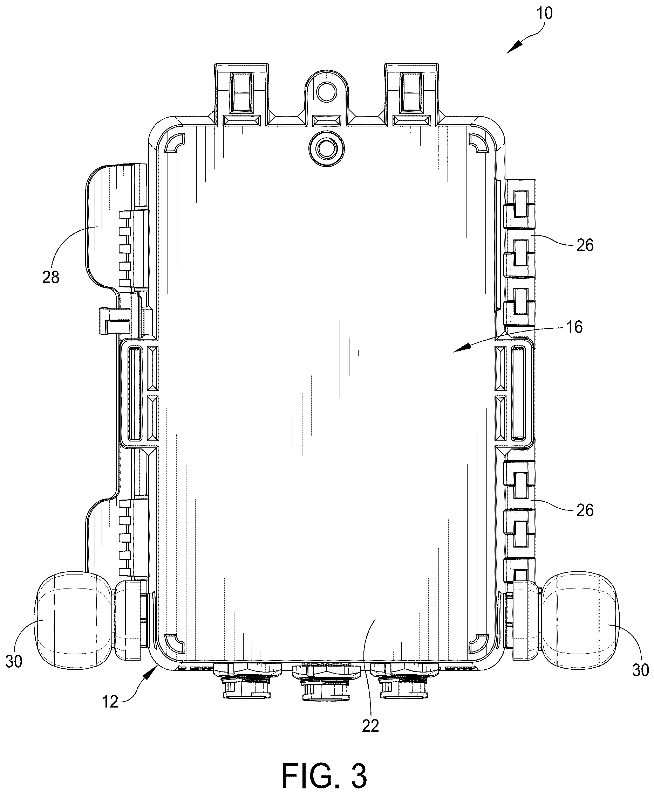

Referring to FIGS. 3-7, the apparatus 10 further includes two microphones, each indicated at 30. Each microphone 30 is configured to receive and process audible noises produced by animals. Each microphone 30 is secured within an opening formed in the back peripheral wall 24 of the back cover 16 of the enclosure 12 with a weatherproof sealant (not shown) to prevent moisture damage within the interior of the enclosure 12. It should be noted that the microphones 30 may be positioned at any location on the exterior of the enclosure 12 to maximize the performance of the apparatus 10. It should also be noted that the provision of microphones 30 is particularly designed to record sounds made from birds and may be omitted when recording noises from other animals, such as bats, which may be recorded from external cabled microphones or a single microphone that are each configured to record ultrasound noises. Thus, other microphones may be provided in addition to microphones 30.

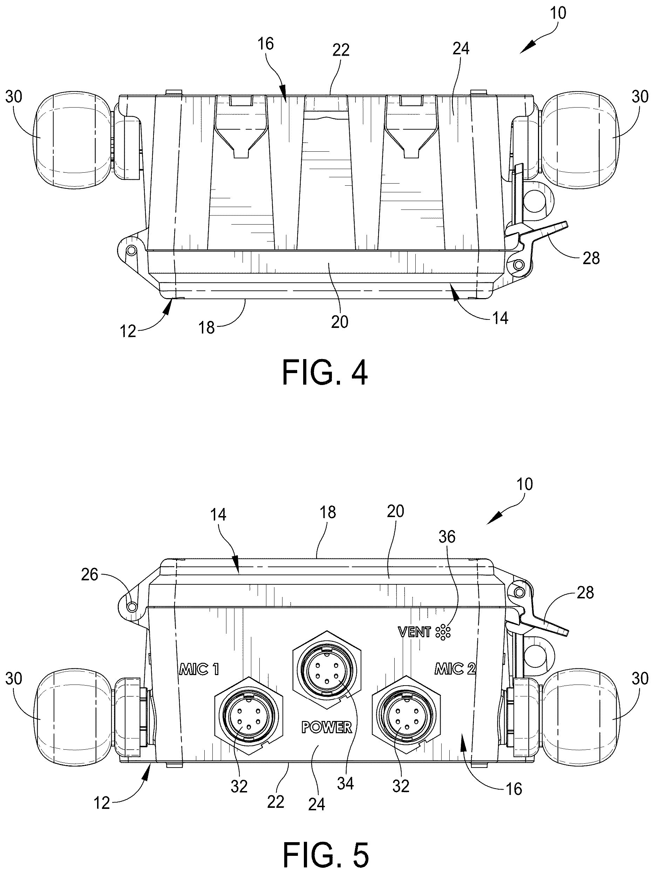

Referring to FIG. 5, the apparatus 10 further includes two microphone plug receptacles, each indicated at 32, which are provided on the back peripheral wall 24 of the back cover 16 to connect the apparatus 10 to remote microphones. The apparatus 10 further includes a power plug receptacle 34, which is also provided on the back peripheral wall 24 of the back cover 16 to receive external power to the apparatus 10. The apparatus 10 further includes a pressure equalization vent 36, which is specially designed to equalize pressure and humidity within the enclosure with atmospheric conditions outside the enclosure. The vent 36 is also provided on the back peripheral wall 24 of the back cover 16 adjacent to the one of the microphone plug receptacles 32.

With additional reference to FIG. 8, in one embodiment, an interior of the front cover 14 of the enclosure 12 supports a controller 40 embodying a printed circuit board, which is protected by a cover 42. The interior of the front cover 14 further includes a display 44 and several (four) push buttons, each indicated at 46, to allow the operator to control the operation of the apparatus 10. An external display (not designated) may be provided on an exterior of the front cover 14. The controller 40 is configured to control the operation of the apparatus 10, and to obtain and store data obtained by the acoustic equipment, which is configured to record sounds via the microphones 30 or externally connected microphones. For example, a watertight or weather-proof connector, such as a CONXALL^{®} connector, may be provided on one side of the enclosure 12 and configured for external power and external microphones. The interior of the front cover 14 further may include a power switch 48, which in addition to power control 34, may be provided to power on and off the apparatus 10.

With embodiments of an apparatus particularly configured for recording bird noises, the two connectors at the top of the enclosure 12 may be provided for microphones and the connector at the bottom of the enclosure 12 may be for external power. With embodiments of an apparatus particularly configured for recording bat noises, the connector at the top of the enclosure 12 may be for a microphone and the connector at the bottom of the enclosure 12 may be for external power. The controller 40 is further configured to display data to the operator on the display 44. In certain embodiments, a light indicator can be provided on an exterior of the enclosure of the apparatus through a light pipe affixed to the front cover to indicate to the operator that the apparatus is functioning. Weatherproofing can be provided for all components that protrude outside the enclosure 12 of the apparatus 10.

Referring to FIGS. 8-13, and particularly to FIG. 8, the back cover 16 further includes a battery compartment, generally indicated at 50, that is configured to support and secure batteries to power the apparatus 10. The battery compartment 50 is provided within an interior of the back cover 16 and includes an interior surface 52. The battery compartment 50 is defined by a top end wall 54, a bottom end wall 56, a first side wall 58, and a second side wall 60, each of which are positioned inboard with respect to the back peripheral wall 24 of the back cover 16. The battery compartment 50 is configured to receive one of two types of batteries. In one embodiment, the battery compartment 50 is configured to receive a first type of battery, e.g., D cell batteries, in a first configuration within the battery compartment 50. A D cell battery is a standardized size of a dry cell battery, having a cylindrical shape with electrical contacts at both ends. D cell batteries are used in devices requiring extended running times. In another embodiment, the battery compartment is configured to receive a second type of battery, e.g., lithium-ion batteries, in a second configuration within the battery compartment 50. A lithium-ion battery is a type of reusable and rechargeable battery. Lithium-ion batteries are noted for their higher specific energy, higher energy density, higher efficiency and longer life. FIG. 8 illustrates the battery compartment 50 of the back cover 16 of the enclosure 12 in an empty condition.

As shown, the interior surface 52 of the battery compartment 50 includes a first type of icon, each indicated at 62, which is provided to inform the operator of the orientation of a first type of batteries, e.g., D cell batteries, within the battery compartment 50. The first type of icon 62 informs the operator to install a first type of battery, e.g., four first type batteries, within the battery compartment 50, with two batteries having their positive terminals facing the top end wall 54 and their negative terminals facing the bottom end wall 56. The interior surface 52 of the battery compartment 50 further includes a second type of icon, each indicated at 64, which is provided to inform the operator of the orientation of a second type of battery, e.g., lithium-ion batteries. The second type of icon 64 informs the operator to install lithium-ion batteries within the battery compartment 50, with the negative terminals of the lithium-ion batteries facing the first side wall 58 and the positive terminals of the lithium-ion batteries facing the second side wall 60.

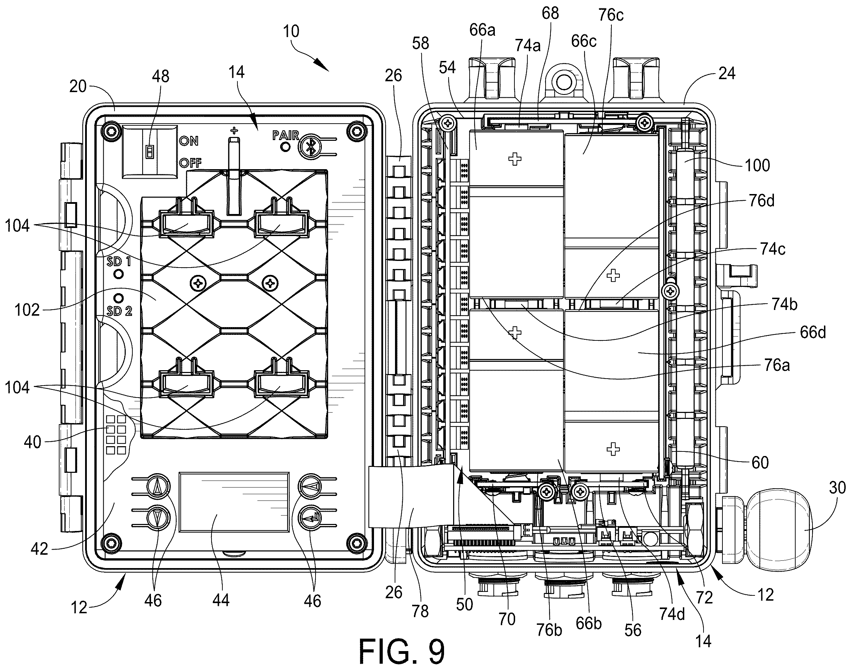

Referring specifically to FIGS. 8 and 9, the battery compartment 50 is configured to receive and secure the first type of batteries, namely four D cell batteries, indicated at 66a, 66b, 66c, 66d. As shown, a common contact element 68 is provided on the top end wall 54 of the back cover 16 within the battery compartment 50. A negative contact element 70 and a positive contact element 72 are provided on the bottom end wall 56 of the back cover 16 within the battery compartment 50, opposite the common contact element 68 provided on the top end wall 54. The operator installing the D cell batteries 66a, 66b, 66c, 66d may reference the first type of icons 62 provided on the interior surface 52 of the battery compartment 50 to properly orient the D cell batteries 66a, 66b, 66c, 66d within the battery compartment 50. As shown, the D cell batteries 66a, 66b, 66c, 66d extend lengthwise within the battery compartment 50.

The arrangement is such that two D cell batteries 66a, 66b are provided on the lefthand side of the battery compartment 50, with a positive terminal 74a of one D cell battery 66a engaging the common contact element 68 on the top end wall 54 and a negative terminal 76b of the other D cell battery 66b engaging the negative element 70 on bottom end wall 56. The positive terminal 74b of the other D cell battery 66b engages the negative terminal 76a of the one D cell battery 66a. Two D cell batteries 66c, 66d are provided on the righthand side of the battery compartment 50, with a negative terminal 76c of one D cell battery 66c engaging the common contact element 68 on top end wall 54 and a positive terminal 74d of the other D cell battery 66d engaging the positive contact element 72 on the bottom end wall 56. The positive terminal 74c of the one D cell battery 66c engages the negative terminal 76d of the other D cell battery 66d. The common contact element 68, the negative contact element 70 and the positive contact element 72 of the battery compartment 50 are coupled to the operating components of the apparatus 10, e.g., by a flexible cable 78, e.g., a ribbon connector. The first type of icon 62 informs the operator on how to install the D cell batteries 66a, 66b, 66c, 66d.

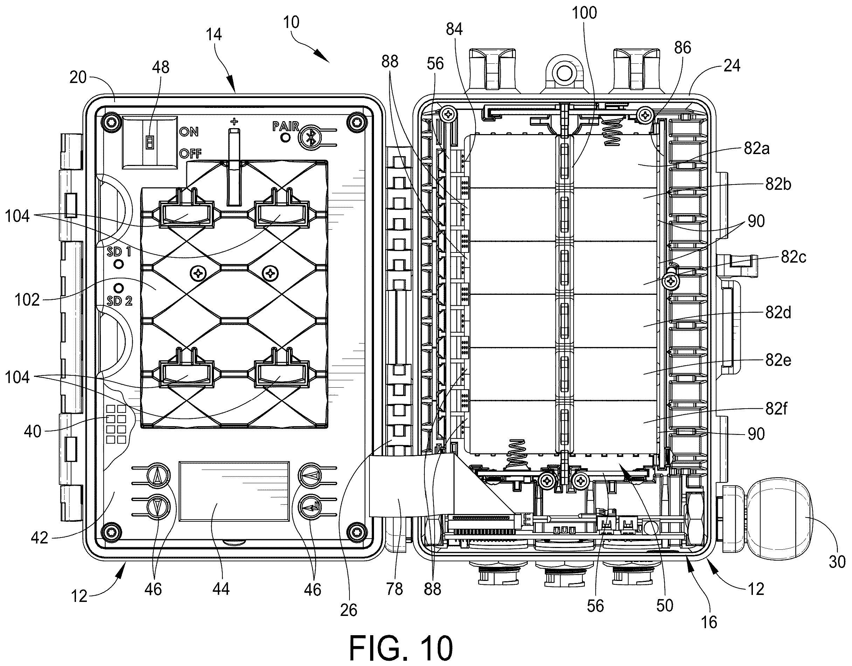

Referring specifically to FIGS. 8 and 10, the battery compartment 50 further is configured to receive and secure the second type of batteries, namely, eleven lithium-ion batteries, indicated at 82a, 82b, 82c, 82d, 82e, 82f, 82g, 82h, 82i, 82j, 82k, that extend crosswise with respect to a length of the battery compartment 50. For example, the lithium-ion batteries 82a-82k may each embody 18650 lithium-ion battery cells.

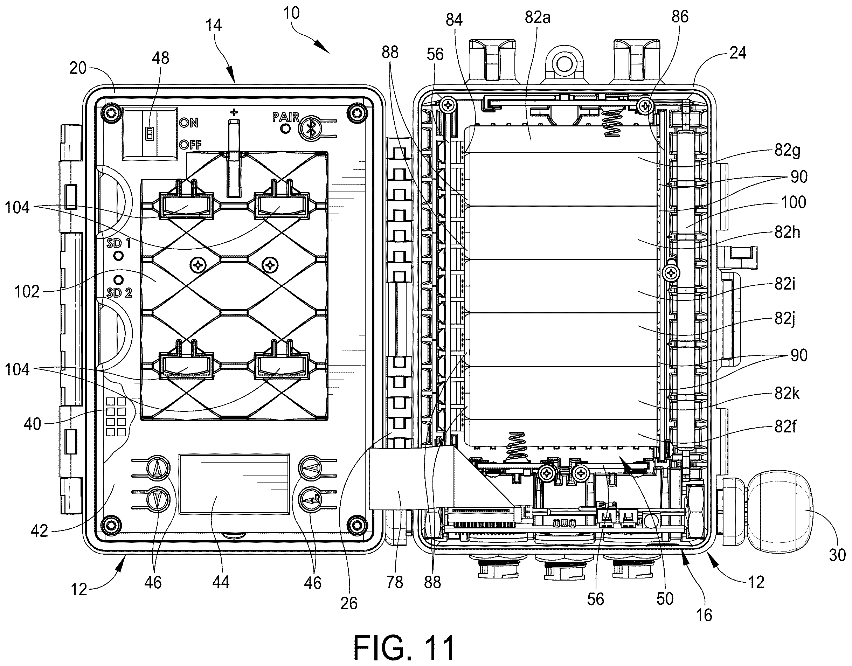

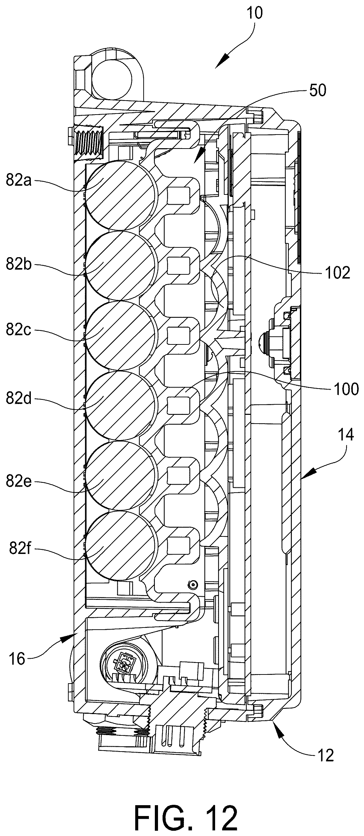

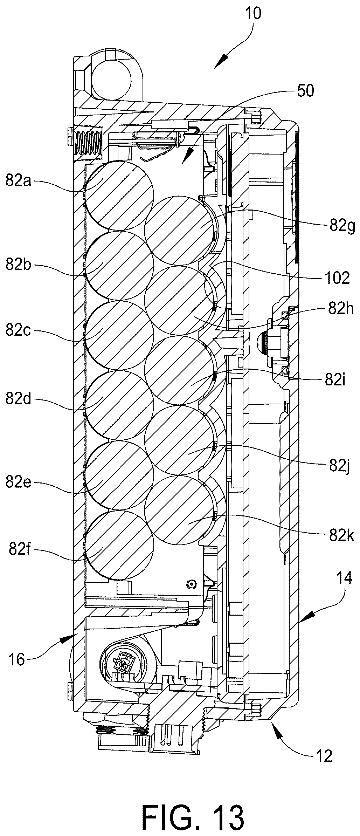

In one embodiment, with reference to FIGS. 10 and 12, the lithium-ion batteries 82a, 82b, 82c, 82d, 82e, 82f may be arranged within the battery compartment 50 to form a first layer of lithium-ion batteries, e.g., six lithium-ion batteries 82a, 82b, 82c, 82d, 82e, 82f, which is initially installed within the battery compartment 50. Similarly, with reference to FIGS. 11 and 13, lithium-ion batteries 82g, 82h, 82i, 82j, 82k may be arranged within the battery compartment 50 to form a second layer of lithium-ion batteries, e.g., five lithium-ion batteries 82g, 82h, 82i, 82j, 82k, which are secondarily installed within the battery compartment 50 over the first layer of lithium-ion batteries 82a, 82b, 82c, 82d, 82e, 82f. The operator installing the lithium-ion batteries 82a-82k may reference the second type of icons 64 provided on the interior surface 52 of the battery compartment 50 to properly orient the lithium-ion batteries 82a-82k within the battery compartment 50. As will be described in greater detail below, any number of lithium-ion batteries 82 can be installed within the battery compartment 50.

As shown, a negative contact element 84 is provided on the first side wall 58 of the back cover 56 within the battery compartment 50 and a positive contact element 86 is provided on the second side wall 60 of the back cover 16 within the battery compartment 50. The arrangement is such that the lithium-ion batteries 82a-82k are inserted within the battery compartment 50 so that negative terminals, each indicated at 88, of the lithium-ion batteries 82 engage the negative contact element 84 and positive terminals, each indicated at 90, of the lithium-ion batteries 82a-82k engage the positive contact element 86. The lithium-ion batteries 82a-82k are coupled to the operating components of the apparatus 10 by the flexible cable 78. The second type of icon 64 informs the operator on how to install the lithium-ion batteries 82a-82k.

Referring to FIGS. 10 and 12, the battery compartment 50 is configured to receive and secure a first layer of the first type of batteries. As noted, an operator can install up to six lithium-ion batteries 82a, 82b, 82c, 82d, 82e, 82f within a bottom of the battery compartment 50. These lithium-ion batteries 82a, 82b, 82c, 82d, 82e, 82f constitute a first layer of batteries. A tool, which will be described in greater detail below, can be used to secure some or all of the first layer of lithium-ion batteries 82a, 82b, 82c, 82d, 82e, 82f in place within the battery compartment 50.

Referring to FIGS. 11 and 13, the battery compartment 50 further is configured to receive and secure a second layer of lithium-ion batteries 82g, 82h, 82i, 82j, 82k on top of the first layer of lithium-ion batteries 82a, 82b, 82c, 82d, 82e, 82f. As noted, an operator can install up to five lithium-ion batteries 82g, 82h, 82i, 82j, 82k on top of the first layer of lithium-ion batteries 82a, 82b, 82c, 82d, 82e, 82f within the battery compartment 50. As with the first layer of lithium-ion batteries 82a, 82b, 82c, 82d, 82e, 82f, the second layer of lithium-ion batteries 82g, 82h, 82i, 82j, 82k extend crosswise with respect to a length of the battery compartment 50 and are seated between adjacent batteries of the first layer of lithium-ion batteries 82a, 82b, 82c, 82d, 82e, 82f. The lithium-ion batteries 82g, 82h, 82i, 82j, 82k of the second layer of lithium-ion batteries also may embody 18650 lithium-ion battery cells.

The manner in which the second layer of lithium-ion batteries 82g, 82h, 82i, 82j, 82k is installed within the battery compartment 50 is similar to the manner in which the first layer of lithium-ion batteries 82a, 82b, 82c, 82d, 82e is installed within the battery compartment 50. As referenced above, the negative contact element 84 is provided on the first side wall 58 of the back cover 16 within the battery compartment 50 and the positive contact element 86 is provided on the second side wall 60 of the back cover 16 within the battery compartment 50. The arrangement is such that the second layer of lithium-ion batteries 82g, 82h, 82i, 82j, 82k is inserted within the battery compartment 50 so that negative terminals 88 of the second layer of lithium-ion batteries 82g, 82h, 82i, 82j, 82k engage the plurality of negative contact element 84 and positive terminals 86 of the second layer of lithium-ion batteries 82g, 82h, 82i, 82j, 82j engage the positive contact element 86. As with the first layer of lithium-ion batteries 82a, 82b, 82c, 82d, 82e, 82f, the second layer of lithium-ion batteries 82g, 82h, 82i, 82j, 82k is coupled to the operating components of the apparatus 10 by the flexible cable 78. The second type of icon 64 informs the operator on how to install the second layer of lithium-ion batteries 82g, 82h, 82i, 82j, 82k.

In another embodiment, although not shown, the battery compartment 50 may be configured to receive and another type of battery, e.g., C cell batteries or AA cell batteries. For example, a C cell battery is a standardized size of a dry cell battery, having a cylindrical shape with electrical contacts at both ends. C cell batteries are used in devices having medium-drain applications. For example, with C cell batteries, positive contact elements may be provided on the one side wall, e.g., the first side wall 58, of the battery compartment 50 and negative contact elements are provided on the other side wall, e.g., the second side wall 60, of the battery compartment 50. The C cell batteries may be oriented crosswise within the battery compartment 50 of the enclosure 12 so that the C cell batteries extend from one side of the back cover 16 to the other side of the back cover 16 within the battery compartment 50. The arrangement is such that C cell batteries may be provided on the lefthand side of the battery compartment 50, with positive terminals of the C cell batteries engaging the positive contact elements, and C cell batteries may be provided on the righthand side of the battery compartment 50, with negative terminals of the C cell batteries engaging negative contact elements. The positive terminals of the C cell batteries provided on the righthand side of the battery compartment 50 may engage the negative terminals of the C cell batteries provided on the lefthand side of the battery compartment 50. The positive contact elements and the negative contact elements are coupled to the operating components of the apparatus 10. The interior surface 52 of the battery compartment 50 may include one or more icons showing the orientation of the C cell batteries within the battery compartment 50.

Referring to FIGS. 12 and 13, in one embodiment, the front cover 14 is configured to include a battery tool 100 and a raised feature 102 including spring feautures, each indicated at 104, that extend interiorly within the battery compartment 50 to engage the batteries. Specifically, the raise feature 102 and the spring features form part of the cover 42 that protects the printed circuit board 40 and is configured to engage the lithium-ion batteries when the lithium-ion batteries 82a-82k are installed in the battery compartment 50. The spring features 104 are configured to engage the D cell when the D cell batteries 66a-66d are installed in the battery compartment 50.

As shown in FIGS. 10 and 12, in one example, the battery tool 100 is provided to engage the first layer of lithium-ion batteries 82a, 82b, 82c, 82d, 82d, 82e to prevent the lithium-ion batteries 82a, 82b, 82c, 82d, 82e, 82f from moving within the battery compartment 50. The battery tool 100 includes an edge that is contoured to match a contour of outer surfaces of the first layer of lithium-ion batteries 82a, 82b, 82c, 82d, 82e, 82f. The battery tool 100 is installed between the front cover 14 and the lithium-ion batteries 82a, 82b, 82c, 82d, 82e, 82f so that the front cover 14 applies a force on the battery tool 100 to maintain the battery tool 100 and the lithium-ion batteries 82a, 82b, 82c, 82d, 82e, 82f in place. It should be noted that in the event that less than six lithium-ion batteries 82a, 82b, 82c, 82d, 82e, 82f are installed within the battery compartment 50, the battery tool 100 is configured to engage the outer surfaces of the installed lithium-ion batteries.

When not in use, the tool 100 may be stored within an elongated storage compartment formed in the back wall 22 of the back cover 16 adjacent to the battery compartment 50. The stored tool 100 is illustrated in FIGS. 8, 9 and 11.

As shown in FIGS. 11 and 13, the raised feature 102 is provided to engage the second layer of lithium-ion battery cells 82g, 82h, 82i, 82j, 82k to prevent the battery cells 82g, 82h, 82i, 82j, 82j from moving within the battery compartment 50. The raised feature 102 is provided on an inner surface of the front wall of the front cover 14. The raised feature 102 includes a contoured surface that is configured to match contours of the outer surfaces of the second layer of lithium-ion batteries 82g, 82h, 82i, 82j, 82k. The raised feature 102 is fabricated from a relatively soft but firm material, such as foam or padding. The spring features 104 are positioned over the D cell batteries 66a-66d and configured to engage the D cell batteries 66a-66d when installed within the battery compartment 50. In one embodiment, the raised feature and the spring features 104 are integrally formed with the cover 42 and fabricated from a polymeric material, such as plastic, to hold the D cell batteries 66a-66d in place when the enclosure 10 is closed and latched. In a certain embodiment, the spring features 104 are molded with the raised feature 102 as part of the cover 42, which, as described above, functions to protect the printed circuit board 40. The spring features 104 accommodate variations in diameters of the D cell batteries 66a-66d.

The battery tool 100, the raised feature 102 and the spring features 104 are configured to engage the batteries to prevent relative movement of the batteries within the battery compartment 50.

Aspects of the present disclosure can be applied to electronic devices other than autonomous data recording devices having acoustic equipment to record autonomous data. For example, the provision of the battery compartment 50 can be applied to any type of device requiring replacement of batteries, including still and video cameras, portable speakers, data recording devices, weather sensors, environmental sensors, and noise monitors to name a few. The foregoing list is not intended to be exhaustive but to show exemplary uses of the present disclosure.

As is known, the batteries, whether the batteries are D cell batteries 66a-66d or lithium-ion batteries 82a-82k, are subject to expire or require recharging after a period of use, and the operator of the apparatus 10 needs to be able to access the batteries to replace them. The enclosure 12 of the apparatus 10 is designed to maintain the integrity of the interior of the enclosure 12 even though the seal between the front cover 14 and the back cover 16 may be broken from time-to-time to access the batteries for replacement. For example, the apparatus 10 is designed so that the operator can replace the first type of batteries, e.g., the D cell batteries 66a-66d, with the second type of battery, i.e., the lithium-ion batteries 82a-82k. After replacing the batteries and re-securing the latch 28, the interior of the enclosure 12 is re-sealed to protect the interior of the enclosure 12 from elements in which the apparatus 10 operates.

In some embodiments, the operator has a choice of powering the apparatus 10. In one embodiment, the operator may select D cell batteries to power the apparatus 10. In another embodiment, the operator may select lithium-ion batteries to power the apparatus 10. Alkaline batteries, such as D cell batteries, are relatively inexpensive, but have less capacity. D cell batteries are easy to find and can be easily transported without significant restrictions. In comparison, lithium-ion batteries provide an advantage of being rechargeable and thus reusable. Although more expensive than disposable batteries, such as D cell batteries, lithium-ion batteries can be re-energized hundreds or even thousands of times. Moreover, lithium-ion batteries have superior energy density thereby extending a length of time equipment, such as acoustic recording equipment, can operate without intervention. However, lithium-ion batteries may be subject to travel and/or storage restrictions, and may not be easily available.

In certain embodiments, the apparatus 10 may include a headphone jack on the exterior of the front cover 14 or the back cover 16 to facilitate audio playback through the use of headphones, for example. In one embodiment, audio data is stored on a removable digital mass storage device provided in the controller 40 provided within the enclosure 12.

In addition to the enclosure 12, the controller 40 of the apparatus 10 may also include or be configured to include means to analyze the recorded data (specialized computer software). Data analysis is performed on the controller 40 or may be transferred to another controller, such as a PC. The transfer of the audio data may be facilitated by the removable digital mass storage device. A flash or SD (example of possible formats) card reader connected to the controller 40 may provide the analysis software with access to the audio data. The data analysis components are twofold - ability to infer direction of sound and distance of sound.

It is to be appreciated that this invention is not limited in its application to the details of construction and the arrangement of components set forth in the following description or illustrated in the drawings. The invention is capable of implementation in other embodiments and of being practiced or of being carried out in various ways. Examples of specific implementations are provided herein for illustrative purposes only and are not intended to be limiting. In particular, acts, elements and features discussed in connection with any one or more embodiments are not intended to be excluded from a similar role in any other embodiments. In addition, it is to be appreciated that the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the invention. Accordingly, the foregoing description and drawings are by way of example only, and the scope of the invention should be determined from proper construction of the appended claims, and their equivalents.

What is claimed is:

## Claims

1. An apparatus for autonomous data recording comprising:
acoustic equipment for recording autonomous data; and
an enclosure to support the acoustic equipment, the enclosure including
a front cover member, and
a back cover member hingedly and releasably secured to the front cover, the back cover member including a battery compartment configured to receive one type of at least two types of batteries to power the apparatus, the battery compartment being configured to receive a first type of battery in a first configuration within the battery compartment and to receive a second type of battery in a second configuration within the battery compartment.

2. The apparatus of claim 1, wherein the battery compartment is provided within an interior of the back cover and includes an interior surface.

3. The apparatus of claim 1 or claim 2, wherein the battery compartment is defined by a top end wall, a first side wall, a second side wall, and a bottom end wall, each of which are positioned inboard with respect to a back peripheral of the back cover.

4. The apparatus of any of claims 1 to 3, wherein the battery compartment, when receiving the first type of batteries, includes a common contact element provided on the top end wall of the back cover within the battery compartment and a negative contact element and a positive contact element provided on the bottom end wall of the back cover within the battery compartment, opposite the common contact element provided on the top end wall.

5. The apparatus of any of claims 1 to 4, wherein the first type of batteries extends lengthwise within the battery compartment, with a first battery and a second battery of the first type of batteries provided on one side of the battery compartment and a third battery and a fourth battery of the first type of batteries provided on a second side of the battery compartment.

6. The apparatus of claim 5, wherein a positive terminal of the first battery of the first type of batteries engages the common contact element and a negative terminal of the second battery of the first type of batteries engages the negative element, and a negative terminal of the third battery of the first type of batteries engages the common contact element and a positive terminal of the fourth battery of the first type of batteries engages the positive contact element.

7. The apparatus of any of claims 1 to 6, wherein the battery compartment, when receiving the second first type of batteries, includes a negative contact element provided on the first side wall of the back cover within the battery compartment and a positive contact element provided on the second side wall of the back cover within the battery compartment, opposite the negative contact element provided on the first side wall.

8. The apparatus of claim 7, wherein a first layer of batteries of the second type of batteries extends crosswise within the battery compartment.

9. The apparatus of claim 8, wherein negative terminals of the first layer of batteries of the second type of batteries engage the negative contact element and positive terminals of the first layer of batteries of the second type of batteries engage the positive contact element.

10. The apparatus of claim 9, wherein a second layer of batteries of the second type of batteries extend crosswise within the battery department on top of the first layer of batteries of the second type of batteries.

11. The apparatus of claim 10, wherein negative terminals of the second layer of batteries of the second type of batteries engage the negative contact element and positive terminals of the second layer of batteries of the second type of batteries engage the positive contact element.

12. The apparatus of any of claims 1 to 11, wherein the front cover is configured to include one of a battery tool and a raised feature, each of which extends interiorly within the battery compartment to engage at least one of the first type of batteries and the second type of batteries, and optionally, wherein the tool is stored within a storage compartment formed in a back wall of the back cover.

13. The apparatus of any of claims 1 to 12, wherein the front cover member has a front wall and a front peripheral wall extending from the front wall, and wherein the back cover member has a back wall and a back peripheral wall extending from the back wall.

14. The apparatus of claim 13, wherein the enclosure further includes at least one hinge configured to connect the front cover member to the back cover member, the at least one hinge enabling the movement of the front cover member and the back cover member between an open position in which the front cover member is spaced from the back cover member and a closed position in which the front cover member engages the back cover member.

15. The apparatus of claim 14, wherein the enclosure further includes at least one latch configured to releasably secure the front cover member to the back cover member to secure the front cover member and the back cover member in the closed position, and optionally, wherein the at least one latch includes a snap-fit feature associated with the back cover on the back peripheral edge of the back cover that releasably engages a mating snap-fit feature associated with the front cover on the front peripheral edge of the front cover, and/or optionally wherein the at least one hinge is configured to connect a front edge of the front peripheral wall of the front cover member to a back edge of the back peripheral wall of the back cover member.
